# FASCICULE DE BREVET EUROPEEN

(11) **EP 2 651 677 B1**
(45) Date de publication et mention de la délivrance du brevet: **30.11.2016**
(21) Numéro de dépôt: 11811040.2
(22) Date de dépôt: 07.12.2011
(51) Int. Cl.: B60J 5/10

(54) **SOUS-ENSEMBLE, NOTAMMENT DE VEHICULE, A PEAU EXTERNE ET STRUCTURE INTERNE FIXEES PAR CORDON DE COLLE**
BAUGRUPPE, INSBESONDERE FÜR EIN KRAFTFAHRZEUG, MIT EINER ÄUSSEREN HAUT UND EINER INNENSTRUKTUR, DIE DURCH EIN KLEBSTOFFKÜGELCHEN FIXIERT SIND
SUBASSEMBLY, IN PARTICULAR FOR A VEHICLE, HAVING AN OUTER SKIN AND AN INNER STRUCTURE THAT ARE ATTACHED BY MEANS OF A BEAD OF ADHESIVE

(30) Priorité: 16.12.2010 FR 1060641
(43) Date de publication de la demande: 23.10.2013
(73) Titulaire: PSA Peugeot Citroën Automobiles S.A., 78140 Velizy Villacoublay (FR); Compagnie Plastic Omnium, 69007 Lyon (FR)
(72) Inventeur: JAOÜEN, Jean-Sébastien, F-91380 Chilly-mazarin (FR); THAI VAN, Jean-Philippe, F-92320 Chatillon (FR); MAS, Christophe, F-78280 Guyancourt (FR); AMORIN, Guilherme, F-01150 Chazey Sur Ain (FR); RAJON, Alexis, F-69004 Lyon (FR); GARBOUD, Lilian, F-01150 Lagnieu (FR)
(74) Mandataire: Ménès, Catherine
(86) Numéro de dépôt international: PCT/FR2011/052891
(87) Numéro de publication internationale: WO 2012/080621

(56) Documents cités:
- EP-A1- 0 340 180
- DE-A1-102007 026 523
- JP-A- 2007 118 852

## Description

La présente invention est relative à un sous-ensemble, notamment de véhicule, à peau externe et structure interne fixées par cordon de colle.

Plus particulièrement, l'invention concerne un sous-ensemble, notamment de véhicule, comprenant une pièce formant une peau externe, notamment de carrosserie, et une structure interne sur laquelle ladite peau est fixée par un cordon de colle à proximité des périphéries de la peau externe et de la structure interne, cette peau externe ayant un comportement en dilatation thermique différent du comportement en dilatation thermique de la structure interne.

Un tel sous-ensemble constituant un hayon de coffre arrière de véhicule est connu du document EP0340180 dans lequel la pièce formant une peau externe est en plastique et la structure interne est métallique. Un tel hayon pose problème concernant les dilatations différentes de la peau externe et de la structure interne en cas de chaleur, la dilatation de la peau externe en plastique étant plus importante que celle de la structure interne. En effet, il ne faut pas que cette peau externe entre en contact avec le reste de la carrosserie lorsque le hayon est en fin de phase de fermeture, ni que les jeux d'accostages entre le hayon et le reste de la carrosserie varient de façon perceptible en fonction des variations de température.

Dans DE 10 2007 026523 est décrite une structure de porte qui comporte un panneau externe et un panneau interne reliés par collage et à comportement propre en dilatation. Pour limiter les effets de différences de dilatation, on prévoit que des barres de renfort de porte lors d'un choc latéral sont utilisées également à titre avantageux pour le respect dimensionnel de la porte à l'encontre des forces de dilatation thermique.

A cet effet, l'invention a pour objet un sous ensemble, notamment de véhicule, comprenant une pièce formant une peau externe, notamment de carrosserie, et une structure interne sur laquelle ladite peau est fixée par un cordon de colle à proximité des périphéries de la peau externe et de la structure interne, cette peau externe ayant un comportement en dilatation thermique différent du comportement en dilatation thermique de la structure interne, caractérisé en ce qu'il comprend au moins un élément mécanique indéformable disposé sur au moins l'un des moyens constitué par la peau externe et la structure interne de façon à s'opposer au déplacement au-delà d'une valeur prédéterminée de la périphérie de la peau externe sous l'effet de forces de dilatation thermique.

Dans divers modes de réalisation du sous-ensemble selon l'invention, on peut éventuellement avoir recours en outre à l'une et/ou à l'autre des dispositions suivantes :
- l'élément mécanique indéformable comporte au moins un câble s'opposant à la dilatation d'au moins l'un des moyens constitué par la peau externe et structure interne lors de la dilatation de ces moyens dans la direction principale de la peau externe et de la structure interne ;
- l'élément mécanique indéformable est solidaire d'au moins une cloison latérale à la périphérie de la structure, le long de cette dernière, la limitation de dilatation de cette structure étant répercutée à la périphérie de la peau par le cordon de colle ;
- le câble entoure la périphérie de la structure en y étant plaqué ;
- le câble entoure la périphérie de la structure sur les faces latérales du hayon et sur sa face inférieure ;
- l'élément mécanique indéformable est solidaire de la peau externe de façon à limiter l'écartement de la périphérie de ladite peau par rapport à la périphérie de la structure, cet écartement étant autorisé par de la flexibilité du cordon de colle ;
- l'élément mécanique indéformable est solidaire de la périphérie de la peau, le long de cette dernière ;
- l'élément mécanique indéformable est disposé entre au moins une cloison latérale à la périphérie de la structure et une zone centrale de la peau ;
- l'élément mécanique indéformable est disposé entre une zone centrale de la structure et au moins une zone latérale de la peau ;
- la peau externe est en matière plastique ;
- la structure interne est en matière plastique ;
- la peau externe est une peau de hayon de coffre et la structure interne est une doublure de dudit hayon.

Par ailleurs, l'invention a également pour objet un véhicule, notamment automobile, comportant un sous-ensemble comprenant une pièce formant une peau externe de carrosserie et une structure interne sur laquelle ladite peau est fixée par un cordon de colle à proximité des périphéries de la peau externe et de la structure interne, cette peau externe étant juxtaposée à au moins une autre partie de la carrosserie du véhicule en laissant subsister un certain jeu entre ce sous-ensemble et ladite autre partie. Dans le véhicule, ce sous-ensemble est conforme à l'invention et le déplacement de la périphérie de la peau externe sous l'effet des forces de dilatation thermique est inférieur à la valeur prédéterminée.

Dans un mode de réalisation du véhicule, le bord périphérique de la peau externe est un retour sensiblement perpendiculaire à l'autre partie de carrosserie du véhicule en laissant subsister ledit jeu entre le retour et ladite autre partie.

D'autres buts, caractéristiques et avantages de l'invention apparaîtront au cours de la description suivante de plusieurs modes de réalisation, donnés à titre d'exemples non limitatifs, en regard des dessins joints.

Sur les dessins :
- la figure 1 est une vue en perspective de trois quarts arrière d'un véhicule pourvu d'un sous-ensemble selon l'invention constituant un hayon de coffre ;
- la figure 2 est une vue en perspective de trois quarts arrière de certains des composants du hayon du véhicule de la figure 1 représenté en éclaté ;
- la figure 3 est une vue en perspective de trois quarts arrière du hayon du véhicule de la figure 1 représentant schématiquement un premier mode de réalisation de dispositif de limitation de dilatation ;
- la figure 4 est une vue schématique en section représentant une partie du hayon, suivant un plan sensiblement horizontal passant par la ligne IV- IV de la figure 3 ;
- la figure 5 est une vue schématique en section conforme à la figure 4, pour un deuxième mode de réalisation de dispositif de limitation de dilatation ;
- la figure 6 est une vue en perspective conforme à la figure 3 pour un troisième mode de réalisation de dispositif de limitation de dilatation ;
- la figure 7 est une vue schématique en section conforme à la figure 4, suivant un plan horizontal passant par la ligne VII-VII de la figure 6 ;
- la figure 8 est une vue en perspective conforme à la figure 3 pour un quatrième mode de réalisation de dispositif de limitation de dilatation ;
- la figure 9 est une vue schématique en section représentant le hayon, suivant un plan horizontal passant par la ligne IX-IX de la figure 8 ;
- la figure 10 est une vue en perspective conforme à la figure 3 pour un cinquième mode de réalisation de dispositif de limitation de dilatation ;
- la figure 11 est une vue schématique en section conforme à la figure 9, suivant un plan horizontal passant par la ligne XI-XI de la figure 10.

Sur les différentes figures, les mêmes références désignent des éléments identiques ou similaires.

En se reportant aux figures, la référence 10 désigne un véhicule équipé d'un sous-ensemble selon l'invention. Ce sous-ensemble est décrit ci-après à titre d'exemple dans son application à un hayon 12 de coffre arrière du véhicule. Dans la description qui va suivre, la direction désignée comme longitudinale correspond à l'axe d'avancement du véhicule.

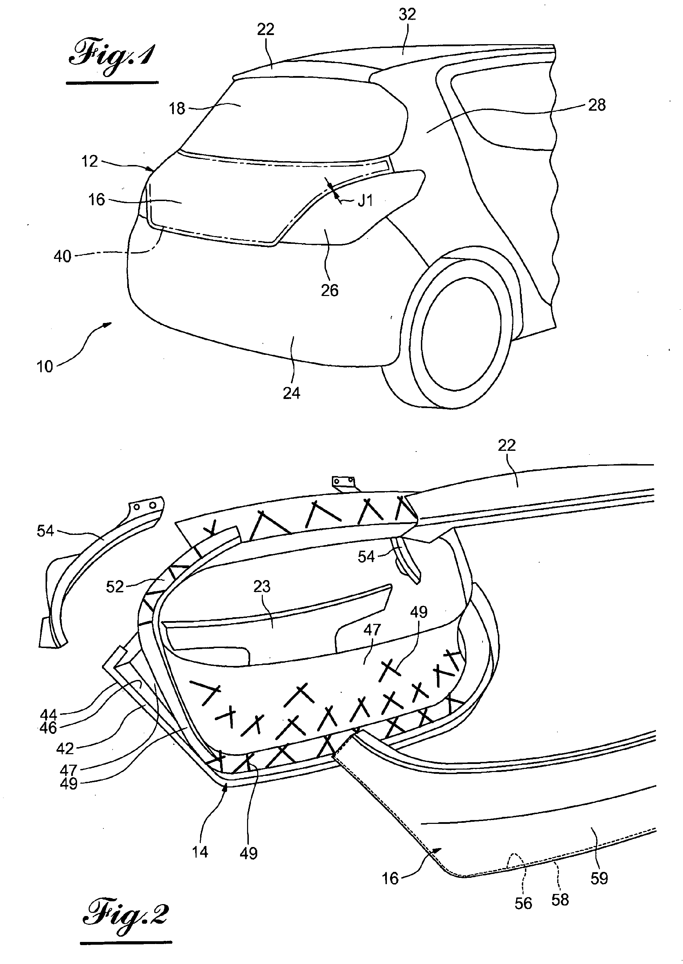

Le hayon 12 comporte principalement, montée sur une doublure interne 14 visible à la figure 2, une pièce transversale de carrosserie 16 formant une peau de carrosserie qui est visible à la figure 1 dans son environnement. Le hayon 12 comporte aussi une lunette arrière 18, un becquet supérieur 22 et une garniture intérieure 23.

Il importe que la peau externe 16 du hayon 12 soit correctement positionnée par rapport au autres parties adjacentes de la carrosserie, à savoir le pare-chocs arrière 24, les feux arrière 26, le montant latéral arrière 28 et le pavillon 32.

En effet des jeux d'accostage J1, typiquement de 3 à 4 millimètres, doivent être respectés de façon précise entre la peau externe 16 et le reste de la carrosserie pour que le véhicule soit esthétique et que sa qualité d'assemblage soit visible.

Le montage du hayon 12 par rapport à la caisse du véhicule est classique, par l'intermédiaire de charnières. Seul le mode d'assemblage de la peau externe 16 par rapport à la doublure interne 14 sera expliqué ci-après.

La peau externe 16 et la doublure interne 14 sont en matière plastique de type couramment utilisée dans l'automobile pour constituer des panneaux de carrosserie et leur structure de support.

Une telle matière est à base par exemple de thermoplastique tel que du polypropylène (PP) ou du polyamide (PA). Elle peut aussi être à base de polymère thermodurcissable. Dans ce cas, il s'agit par exemple de matière qui est présentée sous forme de feuilles destinées au moulage par compression et qui est couramment désignée par le sigle SMC correspondant à l'expression « Sheet Molding Compound » (traduit littéralement par l'expression composant de moulage en feuille).

La peau externe 16 est assemblée à la doublure interne 14 par l'intermédiaire d'un cordon de colle flexible du type de celle couramment utilisée pour coller un pare-brise avant du véhicule sur son encadrement constitué par une partie de la caisse du véhicule.

Une telle colle qui convient aux matières plastiques permet par sa flexibilité un déplacement de la peau externe 16 par rapport à la doublure interne 14 lorsqu'elles se dilatent différemment l'une de l'autre. Ces dilatations différentes peuvent résulter de leurs différences structurelles impliquant des différences de rigidité, de leurs différences d'épaisseurs, de leurs matières plastiques différentes et/ou simplement de l'exposition au soleil plus importante de la peau externe vis-à-vis de l'exposition de la structure interne.

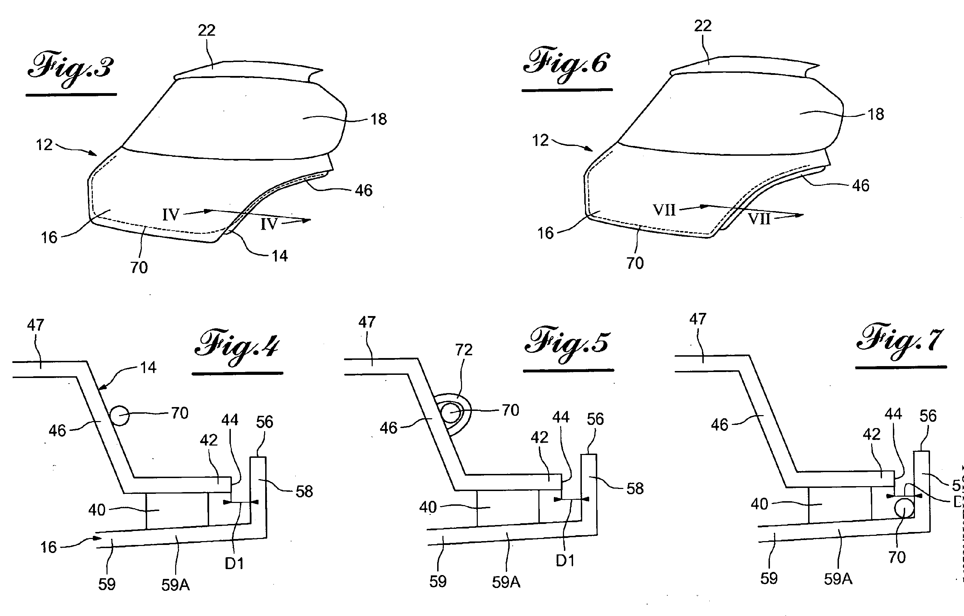

Le cordon de colle est numéroté 40 à la figure 4 par exemple. Il est schématisé en traits pointillés mixtes à la figure 1.

Le cordon de colle 40 est positionné entre des zones périphériques parallèles de la peau externe 16 et de la doublure interne 14, à distance de leur limite périphérique.

La limite périphérique de la structure interne 14 est numérotée 44 notamment aux figures 2, 4 et 9. Elle est à l'extrémité libre d'un bord périphérique 42 de la zone périphérique correspondante de la structure interne 14. Le bord périphérique 42 de la structure interne 14 est transversal. Il est raccordé à une cloison latérale 46 longitudinale, elle même raccordée à une paroi de fond 47 transversale sur laquelle vient se fixer la garniture intérieure 23. C'est sur ce bord périphérique transversal 42 que le cordon de colle 40 est appliqué.

Sur sa paroi de fond 47, la structure interne 14 comporte des nervures de renforts 49 par exemple en nid d'abeille, localement rattachées à la cloison latérale 46. La structure interne 14 comporte en outre des montants 52 qui sont surmoulés sur des âmes métalliques 54 dont le contour correspond au contour de la partie verticale avant de la lunette arrière 18. Ces montants peuvent donner à la doublure une rigidité et une inertie thermique impliquant un comportement particulier en dilatation.

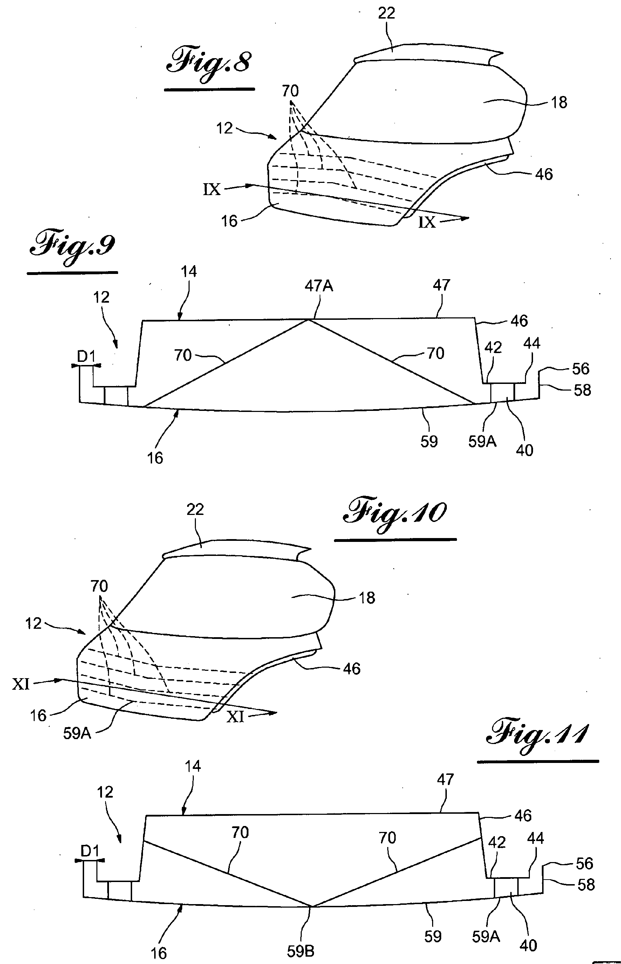

La limite périphérique de la peau externe 16 est numérotée 56 notamment aux figures 4 et 9. Elle est à l'extrémité libre d'un retour périphérique 58 de la peau externe 16. Ce retour 58 est sensiblement parallèle à la cloison latérale 46 de la doublure interne 14. Un espacement D1 est présent entre le retour 58 de la périphérie de la peau externe 16 et la limite périphérique 44 de la doublure interne 14 formant structure du hayon 12.

Le retour 58 de la peau externe 16 est raccordé à une paroi principale 59 sensiblement parallèle à la paroi de fond 47 de la doublure interne 14, tout en ayant localement et à distance du retour périphérique des galbes que la paroi de fond 47 n'a pas.

Le cordon de colle 40 s'étend entre les zones périphériques constituées par le bord 42 de la doublure interne 14 et le bord 59A de la paroi principale 59 de la peau externe 16. Le cordon 40 est sensiblement parallèle aux limites périphériques 44 et 56. Il est à proximité de ces dernières, par exemple à distance de 1 à 5 centimètres. Pour plus de facilité de lecture des figures, le cordon de colle est représenté plus épais qu'il ne l'est en réalité.

La peau externe 16 se dilate plus que la doublure interne 14, soit en raison de sa matière différente de celle de la doublure interne 14, en raison de son exposition plus importante au soleil et/ou en raison de son épaisseur différente de celle de la doublure interne. Or, pour le respect des jeux d'accostage J1 entre la peau externe 16 et le reste de la carrosserie, il faut éviter que la dilatation ne rende la peau externe trop grande.

En outre, la présence des renforts 49 tend à limiter la dilatation de la doublure interne 14. Or, pour le respect des jeux d'accostage J1 entre la peau externe 16 et le reste de la carrosserie, il faut aussi éviter que la différence de dilatation entre la peau externe 16 et la doublure 14 soit trop grande en rendant la variation de l'espacement D1 trop grande. Il importe que cette variation, qui est un écartement de la périphérie 58 de la peau 16 par rapport à la périphérie 42 de la doublure 14 lors de la dilatation, soit inférieure au jeu J1 d'accostage.

Dans le hayon 12, il est prévu un dispositif de limitation de dilatation comportant des éléments mécaniques indéformables 70 disposés sur au moins l'un des moyens constitué par la peau externe 16 et la doublure 14 formant structure interne. Ainsi, lorsque le hayon est soumis à de fortes chaleurs, par exemple supérieures à quarante degrés Celsius, les éléments mécaniques indéformables s'opposent au déplacement au-delà d'une valeur prédéterminée de la périphérie 58 de la peau externe 16 sous l'effet de forces de dilatation thermique. Cette valeur prédéterminée est inférieure au jeu J1 entre le hayon et le reste de la carrosserie qui l'entoure.

Selon l'implantation des éléments mécaniques indéformables 70 dans le hayon 12, la colle peut participer à la limitation de la dilatation pour que la tension provoquée par les éléments mécaniques indéformables 70 lors de la dilatation du hayon soit appliquée globalement dans le hayon pour limiter sa dilatation lors de grandes chaleurs.

Dans les modes de réalisation représentés aux figures 8 à 11, les éléments mécaniques indéformables 70 comportent au moins un câble par exemple métallique.

Les éléments mécaniques indéformables 70 mettent sous contrainte au moins l'un des moyens constitué par la peau externe 16 et structure interne 14 lors de la dilatation de ces moyens. Cette mise sous contrainte correspond à la limitation de dilatation résultant de l'indéformabilité du câble 70 ou des câbles 70 par rapport à la doublure 14 ou la peau 16 lors de fortes chaleurs.

Le câble s'oppose à la dilatation d'au moins l'un des moyens constitué par la peau externe 16 et doublure interne 14 lors de leur dilatation dans leur direction principale, à savoir la direction transversale au véhicule. Le câble est pré-tendu pour pouvoir s'opposer à la dilatation dès qu'elle commence à intervenir, les éléments mécaniques indéformables 70 à câble étant de manière générale disposés sans jeu sur au moins l'un des moyens constitué par la peau externe 16 et la doublure 14 formant structure interne.

Dans un premier mode de réalisation du sous ensemble représenté aux figures 3 et 4, le câble 70 est solidaire de la cloison latérale 46 à la périphérie de la doublure 14, le long de cette dernière. Le câble 70 entoure la périphérie de la doublure 14 sur les faces latérales du hayon et sur sa face inférieure, en étant plaqué contre lesdites faces.

Dans ce premier mode de réalisation du sous ensemble, un câble met sous tension ou sous contrainte essentiellement la périphérie de la doublure 14 en étant disposé sans jeu autour de ses cloisons latérales. La limitation de dilatation imposée à la périphérie de la doublure 14 est répercutée à la périphérie 58 de la peau externe 16 par le cordon de colle 40.

L'ancrage de chaque extrémité du câble 70 à sa cloison latérale 46, tout comme la solidarisation du reste du câble 70 à la doublure 14, sont effectués par tout moyen d'attache de type connu. Un tel moyen d'attache doit permettre la tension du câble au repos à température ambiante avoisinant vingt degrés Celsius et la rigidité de l'ancrage du câble lors de la dilatation du hayon 12. Ainsi, une contrainte est exercée sur le hayon, avec pré-contrainte au repos, pour éviter que le câble ne soit détendu à température ambiante par rapport à la doublure et pour éviter le jeu entre le câble et le hayon.

Le fonctionnement du sous-ensemble découle déjà en partie de la description qui précède mais va maintenant être détaillé.

En cas de forte chaleur, quand le hayon 12 se dilate, la peau externe 16 tend à s'agrandir plus que la doublure 14, mais les câbles 70 mettent globalement le hayon 12 sous contrainte pour en limiter la dilatation à sa périphérie.

Le retour périphérique 58 de la peau externe 16 et le bord périphérique 42 de la doublure interne 14 étant accolés dans la direction de leur dilatation, le câble 70 et le cordon de colle 40 agissent à l'encontre de la dilatation de la périphérie de la peau externe.

Ainsi, le pourtour de la peau externe 16 ne se déforme pas significativement par rapport au pourtour de la doublure interne 14, ce pourtour étant rigide et peu sujet à la dilatation du fait du câble qui devient tendu sans être déformé quand le hayon est soumis aux fortes chaleurs. Les jeux d'accostage entre le hayon et le reste de la carrosserie sont conservés.

Avantageusement, sous l'effet de forces de dilatation thermique il n'y a pas de déplacement latéral de la périphérie 58 de la peau externe 16 au-delà d'une valeur prédéterminée autorisée par la dilatation des câbles et par une légère dilatation de la périphérie de la structure. La valeur de dilatation des câbles peut être considérée comme nulle ou proche de zéro.

Avantageusement, les câbles 70 permettent de contraindre la périphérie de la peau externe 16 à se conformer aux dimensions de la périphérie de la doublure 14, pour que la dilatation du hayon soit contenue en regard de son encadrement constitué par le reste de la carrosserie. Une pré-contrainte est déjà appliquée à température ambiante autour de vingt degrés Celsius.

Avantageusement, dans ce premier mode de réalisation de hayon, la limitation de dilatation périphérique de la doublure 14 suffit à limiter la dilatation périphérique de la peau externe 16, avec report le cas échéant de dilatation vers le centre du hayon. Ce report fait que la dilation est imperceptible.

Dans le deuxième mode de réalisation du sous ensemble représenté à la figure 5, qui est une variante du premier mode de réalisation, des pontets 72 issus de moulage de la doublure 14 maintiennent le câble 70 pour servir de passe câble et d'ancrage.

En variante non représentée de ces deux premiers modes de réalisation, une pluralité de câbles parallèles est implantée comme expliqué ci-dessus en relation aux figures 3 à 5.

Dans le troisième mode de réalisation du sous ensemble représenté aux figures 6 et 7, le câble 70 est solidaire du retour périphérique 58 de la peau externe 16, en suivant son angle de raccordement à la paroi principale 59 de la peau externe 16. Le câble 70 suit intimement la périphérie de ladite peau 16 sur les faces latérales du hayon et sa face inférieure. Ici aussi, le câble 70 applique une pré-contrainte à température ambiante et une contrainte accrue lors de la dilatation du hayon pour éviter un agrandissement trop important de la périphérie de la peau externe 16.

Dans ce troisième mode de réalisation du sous ensemble, le câble met sous tension ou sous contrainte la périphérie de la peau externe. Il limite l'écartement de la périphérie de la peau 16 par rapport à la périphérie de la doublure 14, cet écartement étant ici encore autorisé par de la flexibilité du cordon de colle 40.

Avantageusement, les déplacements mutuels de la peau externe 16 par rapport à la doublure formant structure interne 14 en cas de différence de dilatation de la peau par rapport à la structure sont principalement localisés à distance du cordon de colle 40 et à distance de la limite périphérique de la peau externe 16 et de la doublure interne 14.

La dilatation du hayon qui n'a pas lieu à sa périphérie est répercutée à sa partie centrale. Dans cette partie centrale, la dilatation n'est pas perceptible en regardant le hayon 12 car elle déforme le hayon dans la direction longitudinale en augmentant légèrement son galbe.

Dans le quatrième mode de réalisation du sous ensemble représenté aux figures 8 et 9, les câbles 70 constituant les éléments mécaniques indéformables sont au nombre de quatre et sont disposés à différentes hauteurs dans le hayon 12. Ils sont disposés en V en étant inclinés d'avant en arrière en s'étendant de la zone centrale 47A de la paroi de fond 47 de la doublure 14 vers le bord 59A de la paroi principale 59 de la peau externe 16 auquel est appliqué le cordon de colle 40.

Dans ce quatrième mode de réalisation, les câbles 70 Ils mettent sous tension ou sous contrainte essentiellement la périphérie de la peau externe 16, à proximité du cordon de colle 40.

L'ancrage des câbles, outre la fixation à leurs extrémités, permet leur pliage à moitié de leur longueur pour leur disposition en V.

Ici, les câbles évitent une grande déformation du cordon de colle sur les côtés du hayon 12, par la traction sur pourtour de la peau externe 16. Avantageusement, les câbles 70 sont disposés de façon à limiter l'écartement de la périphérie 58 de la peau 16 par rapport à la périphérie 42 de la doublure 14, cet écartement étant autorisé par de la flexibilité du cordon de colle 40.

Avantageusement, les déplacements mutuels de la peau externe 16 par rapport à la doublure formant structure interne 14 en cas de différence de dilatation de la peau par rapport à la structure sont principalement localisés à distance du cordon de colle 40 et à distance de la limite périphérique de la peau externe 16 et de la doublure interne 14.

La dilatation du hayon qui n'a pas lieu à sa périphérie est répercutée à sa partie centrale. Dans cette partie centrale, la dilatation n'est pas perceptible en regardant le hayon 12 car elle déforme le hayon dans la direction longitudinale en augmentant légèrement son galbe.

Dans le cinquième mode de réalisation du sous ensemble représenté aux figures 10 et 11, les câbles mettent sous tension essentiellement la périphérie de la doublure 14 en étant disposés entre les cloisons latérales 46 à la périphérie de la doublure 14 et une zone centrale 59B de la paroi principale 59 de la peau 16.

Dans ce cinquième mode de réalisation, les câbles 70 constituant les éléments mécaniques indéformables sont aussi au nombre de quatre et sont disposés à différentes hauteurs dans le hayon 12. Ils sont disposés en V en étant inclinés d'avant en arrière, de la cloison latérale 46 de la doublure 14 vers la zone centrale 59B de la peau 16. Comme précédemment, l'ancrage des câbles, outre la fixation à leurs extrémités, permet leur pliage à moitié de leur longueur pour leur disposition en V.

Ici aussi, l'ancrage des extrémités de chaque câble 70 à leur cloison latérale 46 et l'ancrage du milieu du câble à la zone centrale 59B de la peau 16 sont effectués par tout moyen d'attache de type connu. Ici aussi, un tel moyen d'attache doit permettre la tension des câbles au repos, avec contrainte sur le hayon à température ambiante, et la rigidité de l'ancrage des câbles lors de la dilatation du hayon 12.

En variante non représentée, l'ancrage des câbles peut être différent de celui proposé aux figures 8 à 10, par exemple en s'étendant horizontalement directement entre les parois latérales de la doublure ou en ayant un ancrage central à la partie inférieure du hayon, en s'étendant sensiblement dans le plan du hayon.

En variante non représentée, le sous-ensemble selon l'invention est appliqué à d'autres parties de carrosserie qu'un hayon de coffre arrière. Par exemple, il s'agit d'un ouvrant latéral ou d'un capot avant dont la structure interne sur laquelle est fixée par collage la peau externe est métallique.

## Revendications

1. Sous-ensemble, notamment de véhicule, comprenant une pièce (16) formant une peau externe, notamment de carrosserie, et une structure interne (14) constituant une doublure sur laquelle ladite peau (16) est fixée par un cordon de colle (40) à proximité des périphéries (42, 58) de la peau externe (16) et de la structure interne (14), cette peau externe ayant un comportement en dilatation thermique différent du comportement en dilatation thermique de la structure interne, comprenant au moins un élément mécanique indéformable (70) de limitation de dilatation de la périphérie (58) de la peau externe (16), disposé sur au moins l'un des moyens constitué par la peau externe (16) et la structure interne (14) de façon à s'opposer au déplacement au-delà d'une valeur prédéterminée de la périphérie (58) de la peau externe (16) sous l'effet de forces de dilatation thermique **caractérisé en ce que** l'élément mécanique indéformable (70) comporte au moins un câble s'opposant à la dilatation d'au moins l'un des moyens constitué par la peau externe (16) et structure interne (14) lors de la dilatation de ces moyens dans la direction principale de la peau externe (16) et de la structure interne (14).

2. Sous-ensemble selon la revendication 1, **caractérisé en ce que** l'élément mécanique indéformable (70) est solidaire d'au moins une cloison latérale (46) à la périphérie (42) de la structure (14), le long de cette dernière, la limitation de dilatation de cette structure étant répercutée à la périphérie (58) de la peau (16) par le cordon de colle (40).

3. Sous-ensemble selon l'une des revendications 1 et 2, **caractérisé en ce que** le câble (70) entoure la périphérie de la structure (14) en y étant plaqué.

4. Sous-ensemble selon la revendication 3, **caractérisé en ce que** le câble (70) entoure la périphérie de la structure (14) sur les faces latérales du hayon et sur sa face inférieure.

5. Sous-ensemble selon l'une quelconque des revendications 1 4, **caractérisé en ce que** l'élément mécanique indéformable (70) est solidaire de la peau externe (16) de façon à limiter l'écartement de la périphérie (58) de ladite peau (16) par rapport à la périphérie (42) de la structure (14), cet écartement étant autorisé par de la flexibilité du cordon de colle (40).

6. Sous-ensemble selon la revendication 5, **caractérisé en ce que** l'élément mécanique indéformable (70) est solidaire de la périphérie (58) de la peau (16), le long de cette dernière.

7. Sous-ensemble selon la revendication 5, **caractérisé en ce que** l'élément mécanique indéformable (70) est disposé entre au moins une cloison latérale (46) à la périphérie (42) de la structure (14) et une zone centrale (59B) de la peau (16).

8. Sous-ensemble selon la revendication 5, **caractérisé en ce que** l'élément mécanique indéformable (70) est disposé entre une zone centrale (47A) de la structure (14) et au moins une zone latérale (59A) de la peau (16).

9. Sous-ensemble selon l'une quelconque des revendications précédentes, **caractérisé en ce qu'**au moins l'un parmi la peau externe (16) et la structure interne (14) est en matière plastique, la peau externe ayant à des températures d'exposition au soleil son comportement en dilatation thermique différent du comportement en dilatation thermique de la structure interne.

10. Sous-ensemble selon la revendication 9, **caractérisé en ce que** la peau externe (16) est en matière plastique.

11. Sous-ensemble selon la revendication 9, **caractérisé en ce que** la structure interne (14) est en matière plastique.

12. Sous-ensemble selon l'une quelconque des revendications précédentes, **caractérisé en ce que** la peau externe (16) est une peau de hayon de coffre (12) et la structure interne (14) est une doublure de dudit hayon (12).

13. Véhicule, notamment automobile, comportant un sous-ensemble (12) comprenant une pièce (16) formant une peau externe de carrosserie et une structure interne (14) sur laquelle ladite peau (16) est fixée par un cordon de colle (40) à proximité des périphéries (42, 58) de la peau externe et de la structure interne, cette peau externe (16) étant juxtaposée à au moins une autre partie (24, 26, 32) de la carrosserie du véhicule (10) en laissant subsister un certain jeu (J1) entre ce sous-ensemble (12) et ladite autre partie (24, 26, 32), **caractérisé en ce que** le sous-ensemble (12) est conforme à l'une quelconque des revendications précédentes et le déplacement de la périphérie (58) de la peau externe (16) sous l'effet des forces de dilatation thermique est inférieur à la valeur prédéterminée.

14. Véhicule selon la revendication précédente, **caractérisé en ce que** le bord périphérique de la peau externe (16) est un retour (58) sensiblement perpendiculaire à l'autre partie (24, 26, 32) de carrosserie du véhicule en laissant subsister ledit jeu (J1) entre le retour (58) et ladite autre partie (24, 26, 32).

## Patentansprüche

1. Unterbaugruppe, insbesondere für Kraftfahrzeug, die ein Teil (16) umfasst, das eine äußere Haut, insbesondere einer Karosserie, bildet, und eine Innenstruktur (14), die ein Futter bildet, auf dem die Haut (16) durch einen Klebstoffwulst (40) in der Nähe der Umfänge (42, 58) der äußeren Haut (16) und der Innenstruktur (14) befestigt ist, wobei diese äußere Haut ein Wärmedehnungsverhalten hat, das von dem Wärmedehnungsverhalten der Innenstruktur unterschiedlich ist, die mindestens ein nicht verformbares mechanisches Element (70) zur Dehnungsbegrenzung des Umfangs (58) der äußeren Haut (16) hat, das auf mindestens einem der Mittel angeordnet ist, die aus der äußeren Haut (16) und der Innenstruktur (14) bestehen, so dass es sich der Verlagerung des Umfangs (58) der äußeren Haut (16) unter der Einwirkung von Wärmedehnungskräften über einen vorbestimmten Wert hinaus widersetzt, **dadurch gekennzeichnet, dass** das nicht verformbare mechanische Element (70) mindestens ein Kabel umfasst, das sich der Dehnung mindestens eines der Mittel, die aus der äußeren Haut (16) und der Innenstruktur (14) bestehen, bei der Dehnung dieser Mittel in die Hauptrichtung der äußeren Haut (16) und der Innenstruktur (14) widersetzt.

2. Unterbaugruppe nach Anspruch 1, **dadurch gekennzeichnet, dass** das nicht verformbare mechanische Element (70) mindestens mit einer seitlichen Wand (46) an dem Umfang (42) der Struktur (14) entlang dieser Letzteren fest verbunden ist, wobei die Dehnungsbegrenzung dieser Struktur auf den Umfang (58) der Haut (16) von dem Klebstoffwulst (40) übertragen wird.

3. Unterbaugruppe nach einem der Ansprüche 1 und 2, **dadurch gekennzeichnet, dass** das Kabel (70) den Umfang der Struktur (14) umgibt, indem es daran angedrückt ist.

4. Unterbaugruppe nach Anspruch 3, **dadurch gekennzeichnet, dass** das Kabel (70) den Umfang der Struktur (14) auf den seitlichen Seiten der Heckklappe und auf ihrer Unterseite umgibt.

5. Unterbaugruppe nach einem der Ansprüche 1 bis 4, **dadurch gekennzeichnet, dass** das nicht verformbare mechanische Element (70) fest mit der äußeren Haut (16) derart verbunden ist, dass es den Abstand des Umfangs (58) von der Haut (16) in Bezug auf den Umfang (42) der Struktur (14) begrenzt, wobei dieser Abstand durch die Biegsamkeit des Klebstoffwulsts (40) gestattet wird.

6. Unterbaugruppe nach Anspruch 5, **dadurch gekennzeichnet, dass** das nicht verformbare mechanische Element (70) fest mit dem Umfang (58) der Haut (16) entlang dieser Letzteren verbunden ist.

7. Unterbaugruppe nach Anspruch 5, **dadurch gekennzeichnet, dass** das nicht verformbare mechanische Element (70) zwischen mindestens einer seitlichen Wand (46) an dem Umfang (42) der Struktur (14) und einer zentralen Zone (59B) der Haut (16) angeordnet ist.

8. Unterbaugruppe nach Anspruch 5, **dadurch gekennzeichnet, dass** das nicht verformbare mechanische Element (70) zwischen einer zentralen Zone (47A) der Struktur (14) und mindestens einer seitlichen Zone (59A) der Haut (16) angeordnet ist.

9. Unterbaugruppe nach einem der vorhergehenden Ansprüche, **dadurch gekennzeichnet, dass** die äußere Haut (16) und/oder die Innenstruktur (14) aus Kunststoff besteht, wobei die äußere Haut bei Sonnenexpositionstemperaturen ein Wärmedehnungsverhalten hat, das von dem Wärmedehnungsverhalten der Innenstruktur unterschiedlich ist.

10. Unterbaugruppe nach Anspruch 9, **dadurch gekennzeichnet, dass** die äußere Haut (16) aus Kunststoff besteht.

11. Unterbaugruppe nach Anspruch 9, **dadurch gekennzeichnet, dass** die Innenstruktur (14) aus Kunststoff besteht.

12. Unterbaugruppe nach einem der vorhergehenden Ansprüche, **dadurch gekennzeichnet, dass** die äußere Haut (16) eine Haut eines Kofferraumdeckels (12) ist, und dass die Innenstruktur (14) ein Futter des Kofferraumdeckels (12) ist.

13. Fahrzeug, insbesondere Kraftfahrzeug, das eine Unterbaugruppe (12) umfasst, die ein Teil (16) umfasst, das eine äußere Karosseriehaut und eine Innenstruktur (14), auf der die Haut (16) durch einen Klebstoffwulst (40) in der Nähe der Umfänge (42, 58) der äußeren Haut und der Innenstruktur befestigt ist, bildet, wobei diese äußere Haut (16) neben mindestens einem anderen Teil (24, 26, 32) der Karosserie des Fahrzeugs (10) liegt, indem ein bestimmtes Spiel (J1) zwischen der Unterbaugruppe (12) und dem anderen Teil (24, 26, 32) gelassen wird, **dadurch gekennzeichnet, dass** die Unterbaugruppe (12) einem der vorhergehenden Ansprüche entspricht, und dass die Verlagerung des Umfangs (58) der äußeren Haut (16) unter der Einwirkung der Wärmedehnungskräfte kleiner ist als der vorbestimmte Wert.

14. Fahrzeug nach dem vorhergehenden Anspruch, **dadurch gekennzeichnet, dass** der umfängliche Rand der äußeren Haut (16) ein Rücklauf (58) ist, der im Wesentlichen zu dem anderen Karosserieteil (24, 26, 32) des Fahrzeugs senkrecht ist, indem das Spiel (J1) zwischen dem Rücklauf (58) und dem anderen Teil (24, 26, 32) belassen wird.

## Claims

1. A subassembly, in particular for a vehicle, including a piece (16) forming an outer skin, in particular for bodywork, and an inner structure (14) constituting a lining on which said skin (16) is attached by means of a bead of glue (40) near the peripheries (42, 58) of the outer skin (16) and of the inner structure (14), this outer skin having a different thermal expansion behaviour than the thermal expansion behaviour of the inner structure, including at least one non-deformable mechanical element (70) for limitation of expansion of the periphery (58) of the outer skin (16), arranged on at least one of the means constituted by the outer skin (16) and the inner structure (14) so as to counter the movement of the periphery (58) of the outer skin (16) beyond a predetermined value under the effect of thermal expansion forces, **characterized in that** the non-deformable mechanical element (70) comprises at least one cable countering the expansion of at least one of the means constituted by the outer skin (16) and the inner structure (14) during the expansion of these means in the main direction of the outer skin (16) and of the inner structure (14).

2. The subassembly according to claim 1, **characterized in that** the non-deformable mechanical element (70) is integral with at least one lateral partition (46) at the periphery (42) of the structure (14), along the latter, the limitation of expansion of this structure being passed on to the periphery (58) of the skin (16) by the bead of glue (40).

3. The subassembly according to one of claims 1 and 2, **characterized in that** the cable (70) surrounds the periphery of the structure (14) by being placed against it.

4. The subassembly according to claim 3, **characterized in that** the cable (70) surrounds the periphery of the structure (14) on the lateral faces of the tailgate and on its lower face.

5. The subassembly according to any one of claims 1 to 4, **characterized in that** the non-deformable mechanical element (70) is integral with the outer skin (16) so as to limit the clearance of the periphery (58) of said skin (16) with respect to the periphery (42) of the structure (14), this clearance being permitted by the flexibility of the bead of glue (40).

6. The subassembly according to claim 5, **characterized in that** the non-deformable mechanical element (70) is integral with the periphery (58) of the skin (16), along the latter.

7. The subassembly according to claim 5, **characterized in that** the non-deformable mechanical element (70) is arranged between at least one lateral partition (46) at the periphery (42) of the structure (14) and a central zone (59B) of the skin (16).

8. The subassembly according to claim 5, **characterized in that** the non-deformable mechanical element (70) is arranged between a central zone (47A) of the structure (14) and at least one lateral zone (59A) of the skin (16).

9. The subassembly according to any one of the preceding claims, **characterized in that** at least one from among the outer skin (16) and the inner structure (14) is made of plastic material, the outer skin having, at temperatures of exposure to the sun, its thermal expansion behaviour different from the thermal expansion behaviour of the inner structure.

10. The subassembly according to claim 9, **characterized in that** the outer skin (16) is made of plastic material.

11. The subassembly according to claim 9, **characterized in that** the inner structure (14) is made of plastic material.

12. The subassembly according to any one of the preceding claims, **characterized in that** the outer skin (16) is a skin of a tailgate of a boot (12), and the inner structure (14) is a lining of said tailgate (12).

13. A vehicle, in particular a motor vehicle, comprising a subassembly (12) including a piece (16) forming an outer skin for bodywork and an inner structure (14) on which said skin (16) is attached by means of a bead of glue (40) near the peripheries (42, 58) of the outer skin and of the inner structure, this outer skin (16) being juxtaposed to at least one other part (24, 26, 32) of the bodywork of the vehicle (10), allowing a certain play (J1) to remain between this subassembly (12) and said other part (24, 26, 32), **characterized in that** the subassembly (12) is in accordance with any one of the preceding claims and the movement of the periphery (58) of the outer skin (16) under the effect of the thermal expansion forces is less than the predetermined value.

14. The vehicle according to the preceding claim, **characterized in that** the peripheral edge of the outer skin (16) is a return (58) substantially perpendicular to the other part (24, 26, 32) of the bodywork of the vehicle, allowing said play (J1) to remain between the return (58) and said other part (24, 26, 32).
